(19) Europäisches Patentamt
European Patent Office
Office européen des brevets

(11) Numéro de publication: **0 034 080**
**B1**

(12) **FASCICULE DE BREVET EUROPEEN**

(45) Date de publication du fascicule du brevet: **30.11.83**

(51) Int. Cl.³: **C 08 J 5/18**, B 29 D 7/22

(21) Numéro de dépôt: **81400106.1**

(22) Date de dépôt: **27.01.81**

(54) **Films grainés obtenus à partir de copolymères éthylène-propylène, leur procédé de fabrication et une installation pour la mise en oeuvre du dit procédé.**

(30) Priorité: **08.02.80 FR 8002748**

(43) Date de publication de la demande:
**19.08.81 Bulletin 81/33**

(45) Mention de la délivrance du brevet:
**30.11.83 Bulletin 83/48**

(84) Etats contractants désignés:
**AT BE CH DE FR GB IT LI LU NL SE**

(56) Documents cités:
**GB - A - 909 326**
**GB - A - 1 087 036**
**LU - A - 44 493**

(73) Titulaire: **Société Chimique des Charbonnages, Tour Aurore Place des Reflets Cédex no 5, F-92080 Paris La Défense 2 (FR)**

(72) Inventeur: **Haas, Armand, 7 Parc Mercier, F-62670 Mazingarbe (FR)**

**EP 0 034 080 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

# Films grainés obtenus à partir de copolymères éthylène-propylène, leur procédé de fabrication et une installation pour la mise en oeuvre dudit procédé

La présente invention concerne des films grainés obtenus à partir de copolymères éthylène-propylène, leur procédé de fabrication et une installation pour la mise en oeuvre dudit procédé.

Le grainage est une opération qui consiste à former à la surface d'un film des motifs en creux et en relief. Ces motifs sont généralement réguliers, de faibles dimensions et peu profonds. Ils ont pour but d'accroître la souplesse du film et de conférer à celui-ci une texture dont le toucher ressemble à celui du tissu.

Il est connu d'effectuer cette opération de grainage sur des films de polyéthylène basse densité radicalaire obtenus par extrusion-soufflage d'une gaine d'épaisseur voisine de 25 à 30 micromètres. La gaine obtenue est coupée longitudinalement en deux films ayant ladite épaisseur. Chacun de ces films est alors soumis à l'opération de grainage par passage à travers un appareil comprenant des dispositifs de maintien de la tension du film, de chauffage du film, de réception du film grainé, l'organe principal d'un tel appareil étant constitué d'un rouleau graineur portant des motifs gravés en creux ou en relief sur lequel le film est appliqué au moyen d'un rouleau presseur.

Le brevet des Etats-Unis d'Amérique n° 3 950 480 décrit un tel procédé de grainage dans lequel le film passe dans une zone de chauffage puis sur un rouleau graineur.

Le brevet des Etats-Unis d'Amérique n° 3 857 144 décrit également un procédé de grainage sur un film double obtenu par pinçage d'une gaine provenant de l'extrusion-soufflage. Le film double grainé obtenu est ensuite séparé en ses deux parties par soufflage d'air, le grainage à froid facilitant cette opération. Le produit obtenu sert à la confection de sacs.

Le brevet luxembourgeois n° 44 493 et le brevet britannique n° 909 326 concernent également le grainage d'un film d'épaisseur double obtenu à partir d'une gaine que l'on aplatit. Le grainage est effectué dans des conditions telles que le film d'épaisseur double obtenu est aisément séparé en deux films d'épaisseur simple.

Le brevet britannique n° 1 087 036 concerne le grainage d'un film obtenu par extrusion à plat d'un mélange d'au moins deux types différents de résines thermoplastiques.

Les procédés selon l'art antérieur présentent principalement comme inconvénient le fait que l'obtention de films de très faible épaisseur (inférieure à 25 micromètres) dans des conditions industrielles (marche par extrusion-soufflage ininterrompue de plusieurs heures) est en pratique très difficile avec les films de polyéthylène obtenu par voie radicalaire.

On a maintenant trouvé qu'il est possible d'obtenir des films grainés dont l'épaisseur est inférieure ou égale à 24 micromètres et qui sont obtenus à partir d'une gaine d'épaisseur inférieure ou égale à 12 micromètres obtenue par extrusion-soufflage de certains copolymères éthylène-propylène. Le film ainsi obtenu est donc un film d'épaisseur double qui, après grainage, est bloqué, c'est-à-dire ne se sépare pas en les deux films qui lui ont donné naissance.

La présente invention a donc pour objets:

— premièrement des films grainés obtenus à partir de copolymères éthylène-propylène et ayant une épaisseur inférieure ou égale à 24 micromètres. Avantageusement lesdits copolymères ont une masse volumique $\varrho$ comprise entre 0,900 et 0,935 g/cm$^3$, un indice de fluidité compris entre 0,4 et 2 dg/min, un taux m de groupes méthyles compris entre 22 et 62 pour 1000 atomes de carbone, et sont tels que leur masse volumique et leur taux de groupes méthyles satisfont la relation:

$$0{,}9534 \leq \varrho + 0{,}83\ m \leq 0{,}9568.$$

Eventuellement, lesdits copolymères peuvent être utilisés, à raison de 60 à 95% en poids, en mélange avec 5 à 40% en poids de polymère radicalaire d'éthylène. Par polymère radicalaire d'éthylène au sens de la présente invention on entend un produit obtenu par polymérisation sous haute pression (généralement 1000 à 4000 bars) et à haute température (140° à 350° C), en présence d'un initiateur de radicaux libres (tel que l'oxygène, les peroxydes ou les peresters), de l'éthylène et éventuellement de faibles quantités d'au moins un monomère copolymérisable avec l'éthylène tel que par exemple l'oxyde de carbone, les acides carboxyliques éthyléniquement insaturés, les esters dérivés desdits acides et d'un alcool ayant de 1 à 8 atomes de carbone, l'anhydride maléique ou l'acétate de vinyle. Dans le cadre de la présente invention on choisit de préférence un polymère radicalaire d'éthylène ayant un indice de fluidité compris entre 0,2 et 5 dg/min:

— deuxièmement un procédé de fabrication desdits films grainés caractérisé en ce que l'on transforme par extrusion-soufflage un copolymère éthylène-propylène éventuellement additionné de polymère radicalaire d'éthylène en une gaine dont l'épaisseur est inférieure ou égale à 12 micromètres, puis en ce qu'on fait passer ladite gaine dans au moins un couple constitué par un rouleau graineur et un rouleau presseur, la température du film au passage entre cesdits rouleaux étant comprise entre 60 et 90° C, de façon à obtenir un film d'épaisseur double bloqué, et

— troisièmement, une installation pour la mise en oeuvre du procédé selon l'invention,

comprenant une boudineuse en amont d'un dispositif d'extrusion-soufflage et un dispositif de grainage en aval dudit dispositif d'extrusion-soufflage, caractérisée en ce que le dispositif de grainage comprend au moins un couple constitué par un rouleau graineur et un rouleau presseur.

Les copolymères à partir desquels sont obtenus les films grainés selon l'invention peuvent être produits par copolymérisation de l'éthylène et du propylène dans au moins un réacteur comportant au moins une zone, à une température comprise entre 180° et 320°C et sous une pression comprise entre 300 et 2500 bars, au moyen d'un système catalytique de type Ziegler, comprenant d'une part au moins un activateur choisi parmi les hydrures et les composés organométalliques des métaux des groupes I à III de la Classification Périodique et d'autre part au moins un composé halogéné de métal de transition, le flux gazeux alimentant le réacteur étant constitué en régime stationnaire de 65 à 85% en poids d'éthylène et de 15 à 35% en poids de propylène et le composé halogéné de métal de transition comprenant un composé complexe de formule

$$(MCl_a)(MgX_2)_y(AlCl_3)_z(RMgX)_b$$

dans laquelle M est un métal choisi parmi le titane et le vanadium, X est un halogène, R est un radical hydrocarboné, $2 \leq a \leq 3$, $2 \leq y \leq 20$, $0 \leq z \leq \frac{1}{3}$ et $0 \leq b > 1$.

Le procédé selon l'invention permet donc d'obtenir un film d'épaisseur double directement grainé portant sur sa surface des motifs dont la dimension peut être comprise entre 10 micromètres et 10 millimètres.

La distance entre la sortie de l'extrudeuse et le rouleau graineur est réglable et comprise, par exemple, entre 2 et 8 m pour une vitesse de défilement comprise entre 5 et 120 m/min (débits compris entre 10 et 300 kg/h). De préférence, elle est telle que la température de la gaine soit abaissée jusqu'à une valeur comprise entre 60 et 90°C au niveau du rouleau graineur, et ceci compte tenu de la vitesse de défilement qui sera également réglée dans le même but. Si besoin est (vitesse de défilement élevée et distance extrudeuse-rouleau graineur faible) un dispositif de refroidissement de la gaine sera prévu en amont du rouleau graineur. A l'opposé on pourra, si nécessaire, adapter aux rouleaux presseur et/ou graineur un système de réchauffage.

Avant passage entre un rouleau presseur et un rouleau graineur, la gaine soufflée peut être préalablement pincée entre deux rouleaux pinceurs. Cette disposition est intéressante dans la mesure où elle peut éviter une déperdition de l'air de soufflage. La température du film au passage entre ces rouleaux pinceurs additionnels doit être supérieure à 60°C, de préférence comprise entre 60 et 90°C.

Le film obtenu, d'épaisseur double bloqué et grainé, peut être bobiné dans une station d'enroulement puis stocké.

Les films grainés selon la présente invention possèdent un excellent toucher comparable à celui du tissu et une grande souplesse qui leur permettent de trouver une application intéressante dans la confection de couches pour bébés.

L'installation pour la mise en oeuvre du procédé selon l'invention comprend une boudineuse en amont d'un dispositif d'extrusion-soufflage et, en aval dudit dispositif d'extrusion-soufflage, à une distance réglable et comprise entre 2 et 8 mètres environ, fonction des conditions de mise en oeuvre du procédé, le dispositif de grainage comprenant au moins un couple constitué par un rouleau graineur et un rouleau presseur. Le rouleau graineur porte sur sa surface des motifs dont la dimension peut être comprise entre 10 micromètres et 10 millimètres. Accessoirement ladite installation peut comprendre, entre le dispositif d'extrusion-soufflage et le dispositif de grainage, un dispositif de pinçage constitué d'un couple de deux rouleaux pinceurs.

Les rouleaux graineur, presseur et pinceurs ont une longueur sensiblement égale à la largeur du film. Les rouleaux presseur et pinceurs sont de préférence caoutchoutés. Si nécessaire, les différents rouleaux comprennent un système d'échange thermique permettant leur maintien à la température désirée. Bien évidemment une telle installation comprend, en aval du dispositif de grainage tous dispositifs permettant le maintien de la tension du film et éventuellement d'enroulement dudit film.

Les exemples suivants ont pour but d'illustrer l'invention.

## Exemple 1

On utilise un copolymère obtenu par copolymérisation de 85% en poids d'éthylène et 15% en poids de propylène en présence de catalyseurs de type Ziegler, ayant une masse volumique de 0,934 g/cm³, un indice de fluidité (mesuré selon la norme ASTM D-1238-73) de 0,8 dg/min, un taux de groupes méthyle (mesuré par spectroscopie infra-rouge) de 25‰, une masse moléculaire moyenne en nombre égale à 11 500, un rapport de la masse moléculaire moyenne en poids Mw à la masse moléculaire moyenne en nombre Mn égal à 13,9.

Ce copolymère est additionné de 6% en poids de dioxyde de titane et transformé par extrusion-soufflage en une gaine d'épaisseur 7,5 micromètres à une vitesse de 25 m/min, la température du produit en sortie de la filière étant de 180°C. Cette gaine passe entre deux rouleaux pinceurs caoutchoutés munis de serpentins internes permettant de maintenir la température du film à une valeur de 90°C. Ces rouleaux pinceurs ont une longueur de 1 mètre et sont situés à 2 mètres de la filière. Le film d'épaisseur double obtenu passe ensuite immédiatement entre un rouleau

presseur et un rouleau graineur ayant une longueur de 1 mètre. Le rouleau presseur est caoutchouté. Le rouleau graineur, en acier inoxydable, porte sur sa surface des motifs en creux en forme de losanges de côté 1 mm. La température du film au niveau du dispositif de grainage est maintenue, à l'aide de serpentins internes audit dispositifs, à une valeur de 70° C.

Le film bloqué et grainé obtenu a une épaisseur de 15 micromètres.

Exemple 2

On utilise un copolymère obtenu par copolymérisation de 74% en poids d'éthylène et de 26% en poids de propylène, en présence de catalyseurs de type Ziegler, ayant une masse volumique de 0,908 g/cm³, un indice de fluidité de 1,9 dg/min, un taux de groupes méthyles de 58‰, une masse moléculaire moyenne en nombre de 15 500 et un rapport $\frac{Mw}{Mn} = 8,7$.

Ce copolymère est additionné de 6% en poids de dioxyde de titane et transformé par extrusion-soufflage en une gaine d'épaisseur 12 micromètres à une vitesse de 100 m/min. La température du copolymère en sortie de filière est de 200° C. Cette gaine passe entre un rouleau presseur caoutchouté et un rouleau graineur du même type qu'à l'exemple 1. Ces rouleaux dont la longueur est de 2 mètres sont situés à 8 mètres de la filière, distance telle que la température du film est, à ce niveau, égale à 60° C.

Le film bloqué et grainé ainsi obtenu a une épaisseur de 24 micromètres. Ce film est particulièrement bien adapté à la confection de couches pour bébés.

Exemple 3

Un mélange constitué de 80 parties en poids de copolymère d'éthylène et de propylène semblable à celui de l'exemple 2, de 20 parties en poids d'un homopolymère d'éthylène obtenu sous haute pression par voie radicalaire, et de 6 parties en poids de dioxyde de titane est extrudé, transformé en gaine et grainé das les conditions de l'exemple 2. Le film d'épaisseur 24 micromètres, bloqué et grainé obtenu est très souple et présente une bonne résistance au déchirement.

**Revendications**

1. Films grainés caractérisés en ce que leur épaisseur est inférieure à 24 micromètres et en ce qu'ils sont obtenus à partir d'une gaine d'épaisseur inférieure ou égale à 12 micromètres obtenue par extrusion-soufflage de copolymères éthylène-propylène.

2. Films grainés selon la revendication 1 caractérisés en ce que les copolymères d'éthylène et de propylène sont utilisés, à raison de 60 à 95% en poids, en mélange avec 5 à 40% en poids de polymère radicalaire d'éthylène.

3. Films grainés selon l'une des revendications 1 et 2 caractérisés en ce que les copolymères éthylène-propylène ont une masse volumique $\varrho$ comprise entre 0,900 et 0,935 g/cm³, un indice de fluidité compris entre 0,4 et 2 dg/min, un taux m de groupes méthyles compris entre 22 et 62 pour 1000 atomes de carbone et sont tels que leur masse volumique et leur taux de groupes méthyles satisfont la relation $0,9534 \leq \varrho + 0,83\,m \leq 0,9568$.

4. Procédé de fabrication de films selon l'une des revendications 1 à 3 caractérisé en ce que l'on transforme par extrusion-soufflage un copolymère éthylène-propylène éventuellement additionné de polymère radicalaire d'éthylène en une gaine dont l'épaisseur est inférieure ou égale à 12 micromètres, puis en ce qu'on fait passer ladite gaine dans au moins un couple constitué par un rouleau graineur et un rouleur presseur, la température du film au passage entre cesdits rouleaux étant comprise entre 60 et 90° C, de façon à obtenir un film d'épaisseur double bloqué.

5. Procédé selon la revendication 4 caractérisé en ce que la gaine, préalablement à l'opération de grainage, est soumise à un passage entre deux rouleaux pinceurs à une température supérieure à 60° C.

6. Installation pour la mise en oeuvre du procédé suivant l'une des revendications 4 et 5 comprenant une boudineuse en amont d'un dispositif d'extrusion-soufflage et un dispositif de grainage en aval dudit dispositif d'extrusion-soufflage, caractérisée en ce que le dispositif de grainage comprend au moins un couple constitué par un rouleau graineur et un rouleau presseur.

7. Installation selon la revendication 6 caractérisée en ce qu'elle comprend en outre, entre le dispositif d'extrusion-soufflage et le dispositif de grainage, un dispositif de pinçage constitué d'un couple de deux rouleaux pinceurs.

**Patentansprüche**

1. Genarbte Filme, dadurch gekennzeichnet, daß ihre Dicke weniger als 24 Mikrometer beträgt und daß sie aus einem durch Extrusionsblasen von Äthylen-Propylen-Copolymeren erzeugten Schlauch einer Dicke von weniger als oder gleich 12 Mikrometer erhalten wurden.

2. Genarbte Filme nach Anspruch 1, dadurch gekennzeichnet, daß die Copolymere von Äthylen und Propylen in einer Menge von 60 bis 95 Gew.-% in Mischung mit 5 bis 40 Gew.-% Äthylenradikalpolymer verwendet wurden.

3. Genarbte Filme nach Anspruch 1 oder 2, dadurch gekennzeichnet, daß die Äthylen-Propylen-Copolymere eine Dichte $\varrho$ zwischen 0,900 und 0,935 g/cm³, einen Fließindex zwischen 0,4 und 2 dg/min und einen Methylgruppenanteil m

zwischen 22 und 62 pro 1000 Kohlenstoffatome besitzen, wobei ihre Dichte und ihr Methylgruppenanteil die Beziehung $0{,}9534 \leq \varrho + 0{,}83\ m \leq 0{,}9568$ erfüllen.

4. Verfahren zur Herstellung von Filmen nach einem der Ansprüche 1 bis 3, dadurch gekennzeichnet, daß man ein Äthylen-Propylen-Copolymer, dem gegebenenfalls Äthylenradikalpolymer zugesetzt ist, durch Extrusionsblasen zu einem Schlauch verarbeitet, dessen Dicke weniger als oder gleich 12 Mikrometer beträgt, sodann den genannten Schlauch durch mindestens ein von einer Prägewalze und einer Druckwalze gebildetes Walzenpaar hindurchführt, wobei die Temperatur des Films beim Durchgang durch die genannten Walzen zwischen 60 und 90° C beträgt, so daß ein Film mit bleibender doppelter Dicke erhalten wird.

5. Verfahren nach Anspruch 4, dadurch gekennzeichnet, daß der Schlauch vor dem Prägevorgang bei einer Temperatur von über 60° C zwischen zwei Quetschwalzen hindurchgeführt wird.

6. Anlage zur Durchführung des Verfahrens nach Anspruch 4 oder 5, mit einer stromauf einer Extrusionsblasvorrichtung angeordneten Strangpresse und einer stromab der genannten Extrusionsblasvorrichtung angeordneten Prägevorrichtung, dadurch gekennzeichnet, daß die Prägevorrichtung mindestens ein von einer Prägewalze und einer Druckwalze gebildetes Walzenpaar umfaßt.

7. Anlage nach Anspruch 6, dadurch gekennzeichnet, daß sie weiters zwischen der Extrusionsblasvorrichtung und der Prägevorrichtung eine von einem aus zwei Quetschwalzen bestehenden Walzenpaar gebildete Quetschvorrichtung besitzt.

**Claims**

1. Embossed films characterized in that their thickness is less than 24 micrometers and in that they are obtained from a tubular web having a thickness of less than or equal to 12 micrometers, the said tubular web being obtained by blow extrusion of ethylene-propylene copolymers.

2. Embossed films according to claim 1 characterized in that the ethylene-propylene copolymers are used, in a ratio of 60 to 95% by weight, in admixture with 5 to 40% by weight of a radical ethylene polymer.

3. Embossed films according to one of claims 1 and 2 characterized in that the ethylene-propylene copolymers have a density $\varrho$ between 0.900 and 0.935 g/cm$^3$, a melt index between 0.4 and 2 dg/min, a proportion m of methyl groups between 22 and 62 per 1000 carbon atoms and are such that their density and their proportion of methyl groups comply with the relation $0.9534 \leq \varrho + 0.83\ m \leq 0.9568$.

4. Process for making films according to claims 1 to 3, characterized in that an ethylene-propylene copolymer, possibly admixed with radical ethylene polymer, is converted by blow extrusion into a tubular web whose thickness is less than or equal to 12 micrometers, then in that the said tubular web is passed between at least one pair constituted by an embossing roll and a pressure roll, the temperature of the film on passage between these said rolls being between 60 and 90°C, so as to obtain a sealed double-thickness film.

5. Process according to claim 4 characterized in that, before the embossing operation, the tubular web is made to pass between two pinch rolls at a temperature greater than 60° C.

6. Apparatus for carrying out the process according to one of claims 4 and 5, comprising an extruder up line of a blow-extrusion device and an embossing device down line of the said blow-extrusion device, characterized in that the embossing device includes at least one pair constituted by an embossing roll and a pressure roll.

7. Apparatus according to claim 6 characterized in that it also includes, between the blow extrusion device and the embossing device, a pinch device constituted by a two pinch-rolls pair.